Europäisches Patentamt

(19) European Patent Office

Office européen des brevets

(11) Publication number : **0 500 301 A1**

## (12) EUROPEAN PATENT APPLICATION

(21) Application number : **92301288.4**

(22) Date of filing : **18.02.92**

(51) Int. Cl.⁵ : **G01B 11/04**

(30) Priority : **19.02.91 US 657681**

(43) Date of publication of application :
**26.08.92 Bulletin 92/35**

(84) Designated Contracting States :
**AT BE CH DE DK ES FR GB GR IT LI LU MC NL PT SE**

(71) Applicant : **Philip Morris Products Inc.
3601 Commerce Road
Richmond Virginia 23234 (US)**

(72) Inventor : **Adkins, Wayne B.
2106 Sedbergh Drive
New Kent, VA 23124 (US)**
Inventor : **McCafferty, Hugh J.
2811 Bosham Lane
Richmond, VA 22113 (US)**
Inventor : **Higgins, Charles T.
30 Glennbrook Circle
Richmond, VA 23124 (US)**

(74) Representative : **Marlow, Nicholas Simon et al
Reddie & Grose 16, Theobalds Road
London WC1X 8PL (GB)**

(54) **Method and apparatus for measuring smoking articles.**

(57)   Method and apparatus for measuring the length 1 of a smoking article 210 for use in an automated test station for measuring physical parameters of smoking articles. The length is measured using an electronic linear array camera 230 to obtain the length along a first axis as the smoking article is advanced from one position to another. The length may be measured while the article is moving or stopped. The length may be measured directly, or indirectly by measuring the length from a selected point.

FIG. 1

This invention relates to methods and apparatus for measuring smoking articles, more particularly to measuring smoking articles in an automated test station for measuring physical characteristics of a plurality of cigarettes.

It is common practice to perform various tests on commercial and experimental smoking articles and their component parts following assembly. These tests include measuring the physical characteristics of the article and its component parts. More specifically, a plurality of like smoking articles are subjected to one or more tests corresponding to one or more specific properties to evaluate the uniformity of the measured property or properties from article to article and to obtain statistical data regarding the mean characteristics of the like articles. Different groups of like articles are typically subjected to the same series of tests under conditions that permit comparing the mean characteristics of the different articles.

One such measured property is the length of the completed article. One technique for measuring the length is to hold manually a cigarette against a ruler or grid and read the dimension from the ruler or grid. Another technique involves counting the number of steps taken by a stepper motor to pass the article completely across an optical sensor, the number of steps corresponding to the length of the article. One problem with the foregoing techniques is that they are not well suited for automatic measurement or use with an automated test station for performing a plurality of tests on such articles in addition to the length measurement. The former technique requires the presence of an operator to conduct the measurement, and can result in inaccuracies as a result of variations in correctly reading the measurement and the scale. The latter technique requires a relatively long period of time to conduct the measurement, for example, several seconds.

It has therefore been desired to provide for an improved method and apparatus for measuring automatically the length of a smoking article. It is another object to measure non-destructively the length of the article in an automatic test facility for testing a plurality of smoking articles in succession.

It has also been desired to obtain the length measurement of a smoking article as the article is advanced from a supply of articles to a workstation without disturbing the article. It has also been desired to obtain a high resolution and accuracy, substantially instantaneous measure of cigarette length automatically.

It has also been desired to provide a computer controlled length measurement workstation for non-destructively measuring the length of a smoking article for use in an automated test facility.

## SUMMARY OF THE INVENTION

In accordance with the present invention, apparatus and methods for measuring the length of a smoking article are provided. Broadly, the invention concerns using means for measuring the length of an object in a single dimension to measure the length of a cigarette as the cigarette is advanced from a first location to a second location. One embodiment of the invention is directed to an apparatus for measuring the length comprising (a) a means for holding a smoking article in a selected longitudinal orientation, (b) a means for measuring the dimension of an object in a dimension having a selected field of view along a first axis, (c) a means for positioning the measuring means so that the first axis is parallel to the selected longitudinal orientation of the article, and (d) a means for measuring the length of the article in response to the dimension of the article in the first axis appearing in the field of view.

In one embodiment, the measuring means is an electronic linear array camera having a focal length corresponding to the desired field of view in the first axis. In one preferred embodiment, the camera is positioned a distance from the means for holding the smoking article and the selected focal length is selected to include the longitudinal ends of the article so that the entire length is directly measured. In a more preferred embodiment the camera is positioned a distance from the means for holding the smoking article so that one edge of the field of view of the camera in the first axis is a known distance from a first location associated with the means for holding the article. Thus, the camera measurement is obtained when one end of the article is at the first location and the length measurement is indirectly obtained by determining how far the article extends into or across the field of view of the camera in the first axis, and summing that measured distance and the known distance.

Advantageously, measuring only the variations in the length of the article from a selected known point provides for enhanced resolution and accuracy of the measurement, as compared to using the same camera to measure directly the length, the use of a linear array camera having a lower pixel resolution in the first axis, as compared to a camera to measure directly the length having the same resolution, or some combination of both. Further, it provides for identifying articles that are too long, i.e., they pass completely through the field of view, or too short, i.e., they do not pass into the field of view, to be measured, as compared to a selected-mean length dimension.

In one embodiment, the first location is a stop extending from the means for holding the smoking article and the article is measured as it comes to rest against the stop. Preferably, such a holding means comprises a chute having a stop end for receiving under gravity smoking articles which are fed one at a time, spaced-apart in rapid succession, from a supply. The chute may be part of an automated test station wherein the articles are to be subjected to a series of tests. Thus, an article will be fed from the supply to slide down the chute until it comes to rest against a stop, where its length is measured in accordance with the invention. Means for removing the article from the chute following the length measurement, for example, a controlled robot gripping device, to deliver the articles to workstations for subsequent testing is provided.

Optionally, means for indicating to the camera when to measure the length may be provided. Such indicating means may be a contact switch located at the stop end of the chute to indicate that a smoking article has contacted the stop and is ready to be measured. Alternately, the camera may be configured or controlled to obtain the length measure when the measured length in the field of view has stopped changing for a predetermined period of time, for example, 85 milliseconds, indicating that the article in its field of view has stopped moving and has come to rest against the stop end of the chute.

In an alternate embodiment, the measurement may be obtained while the article is continuously advanced. In this embodiment, the first location further comprises a means for detecting an edge of the advancing article and the means for positioning the camera positions the camera to measure the length in response to the detecting means. In such an embodiment, the instantaneous measurement can be electronically adjusted to compensate for movement of the article during the time it takes the camera to obtain the measurement after the signal from the detecting means in view of the rate of travel of the article. In the indirect measurement embodiment, the field of view of the camera is thus located a known distance from the detector means at the first location to measure the extent the other end of the article extends into the field of view of the camera in the first axis. Preferably, the detector means is an optical sensor which indicates when an object has interrupted light illuminating the sensor.

Another embodiment of the present invention is directed toward a method of measuring the length of a smoking article. One such method comprises the steps of (a) providing a means for measuring the dimension of an object in a first dimension having a selected field of view along a first axis, (b) positioning the smoking article at a first location relative to the measuring means so that the longitudinal axis of the smoking article is parallel to the first axis, and (c) measuring the length of the article extending into the field of view in the first axis. In a preferred embodiment, the method comprises passing a smoking article along a fixed path having a first direction, providing an electronic linear array camera with a focal length and a corresponding field of view along the first axis, positioning the camera a distance from the fixed path corresponding to the focal length so that the field of view in the first axis is parallel to the path axis, passing a smoking article along the path, and measuring the length of the article while it is in the field of view of the camera.

In one preferred embodiment, measuring the length further comprises measuring the entire length of the article directly, from one end to the other end. In an alternate preferred embodiment, measuring the length further comprises positioning the camera so that one edge of the field of view in the first axis is located a known distance from a preselected location and measuring the length further comprises measuring the dimension of the article extending into the field of view of the camera in the first axis from the one end of the field of view and summing that measurement to the known distance.

In an embodiment for measuring an article while the article is at rest, the preselected location corresponds to a stop end of a chute against which the smoking article comes to rest. Optionally, measuring the length may further comprise measuring the length in response to a signal corresponding to the article being at rest against the stop end, for example, a signal from a contact switch. In an alternate embodiment where the article is measured during continuous motion, the preselected location may be a means for detecting one edge of the smoking article, which detecting means also provides a signal indicating that the measurement is to be made.

Advantageously, the present invention provides for rapid, accurate, reproducible, and non-destructive measurements of the length of smoking articles. The accuracy is limited by the accuracy of the camera and the resolution of the field of view and focal length. Importantly, the present invention can be used in an automated test station and the need for an operator to perform manually each length measurement is obviated. Further, the camera can be adapted to transmit electronically the measured length to a data recording device so that the lengths of a plurality of articles can be stored and compared and the data for any tests performed on each measured article can be correlated.

Brief Description of the Drawings

Further features of the invention, its nature and various advantages will be more apparent from the accompanying drawings and the following detailed description in which like reference numerals refer to like elements, and in which:

FIG. 1 is a side view of an apparatus in accordance with a preferred embodiment of the present invention;

FIG. 2 is a front view taken along lines 2-2 of FIG. 1;

FIG. 3 is a side view of an apparatus in accordance with an alternate embodiment of the present invention;

FIG. 4 is a representation of a direct measure of length in accordance with the present invention; and

FIG. 5 is a representation of the field of view of the camera of FIG. 1.

Detailed Description of the Drawings

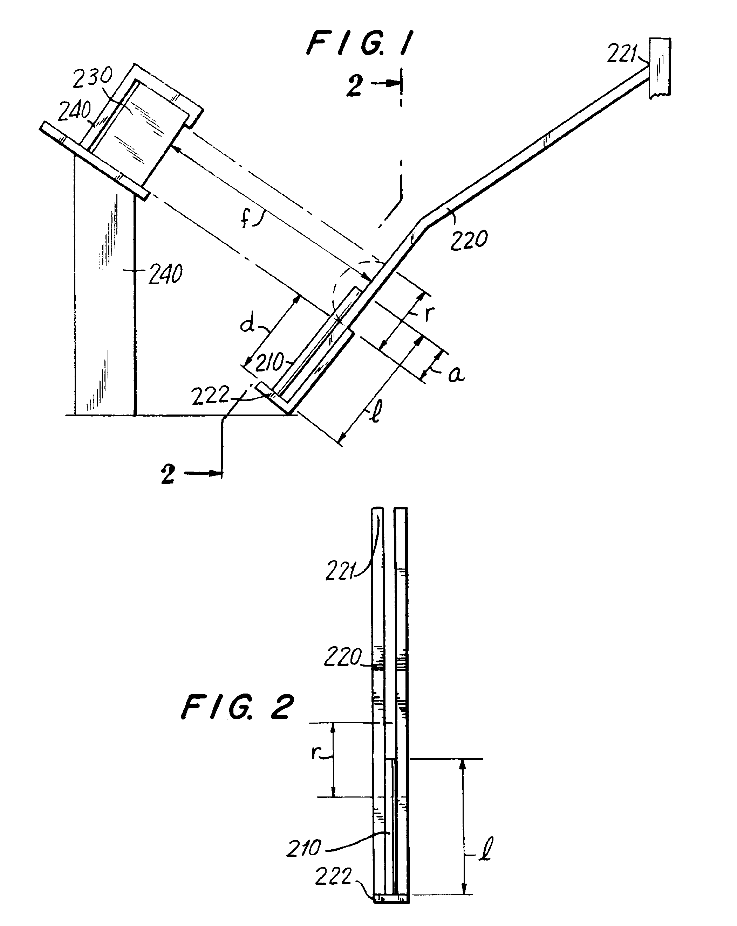

Referring to FIGS. 1, 2, and 5, an embodiment of the present invention includes chute 220, camera 230 and bracket 240. Chute 220 is configured to receive an article 210 at top 221 of chute 220, and is provided with a cross sectional surface having a "U" shape (not shown) so that article 210 will advance along chute to stop 222 under gravity. Such a surface also may be concave, V-shaped or U-shaped, and may be coated with a low friction material, e.g., Teflon, or highly polished to minimize friction between article 210 and chute 220. Typical articles 210 are cigarettes having filter ends and tobacco containing smoking material. Chute 220 also may comprise two rods or rails that are spaced-apart in parallel (not shown) so that articles 210 will proceed along chute 220 and any tobacco particles that come loose from article 210 do not accumulate in chute 220 or otherwise impede the advance of article 210.

Camera 230 is mounted on bracket 240 to be positioned a selected distance from chute 220. Camera 230 is an electronic linear array camera for measuring lengths along one axis or dimension. Accordingly, that measuring axis is oriented in parallel with chute 220 so that article 210 will be in the proper orientation for obtaining the length measure. Camera 230 is located a focal distance f from the location article 210 will be at when it is measured, and is provided with a field of view r corresponding to focal distance f.

In the embodiments of FIGS. 1, 2, and 5, camera 230 measures the length a of article 210 that extends into the field of view of the camera in the first axis. Accordingly, one edge of the field of view is located a known distance d from stop 222. Thus, camera 230 obtains the measure 1 of article 210 indirectly by summing the measured length a and the known distance d. In embodiments where the image appearing in field of view r of camera 230 is not a true measure, the measure must be converted by the magnification (or reduction) power of the camera lens to obtain the true length dimension.

Camera 230 is preferably a model HVS 256 camera sold by the Microswitch Division of Honeywell, Engelwood, Colorado. This camera has a resolution of 256 pixels in a selected linear dimension or axis. Model HVS 256 is preferably configured to obtain a 50 mm field of view at an accuracy of better than 0.1 mm, preferably 0.05 mm, corresponding to a resolution in the range of from .02 to .01 mm. It is a relatively inexpensive linear array camera, and is thus advantageous to use to measure indirectly the article length. In accordance with a preferred embodiment, camera 230 is configured so that distance d is 75 mm, field of view r is 50mm, one end of which is spaced 75 mm from stop 222, the other end of which extends to 125 mm from stop 222, providing for a focal distance f selectable in the range of from 225 to 260 mm. Thus camera 230 is capable of measuring automatically conventional cigarettes having a length from 75 to 125 mm.

In making indirect measurements, the first distance d may be selected to accommodate a smoking article of a particular size or range of sizes. Preferably, d is selected to be between 25 to 100 mm, depending on the corresponding field of view range, which is selected to obtain an accuracy of greater than 0.1 mm and to include acceptable lengths (and variations in lengths) of a large number of types of smoking articles. Appropriate accuracies may be, for example, in the range of .025 to .175 mm, .025 to .075 mm, and .042 to .01 mm. Thus, for smoking articles having a length between 100 and 175 mm, a d of 100 mm, and a field of view of 75 mm would be appropriate. Alternatively a d of 75 mm and an r of 25-100 mm would be appropriate. The larger the distance d, the smaller the field of view r, which provides for a higher resolution measurement. Variations include selecting a d in the range of from 25 to 100 mm, more preferably 50-75 mm, and selecting an r in the range of from of 25 to 100 mm, more preferably 50-75 mm, for articles 50 to 150 mm in length.

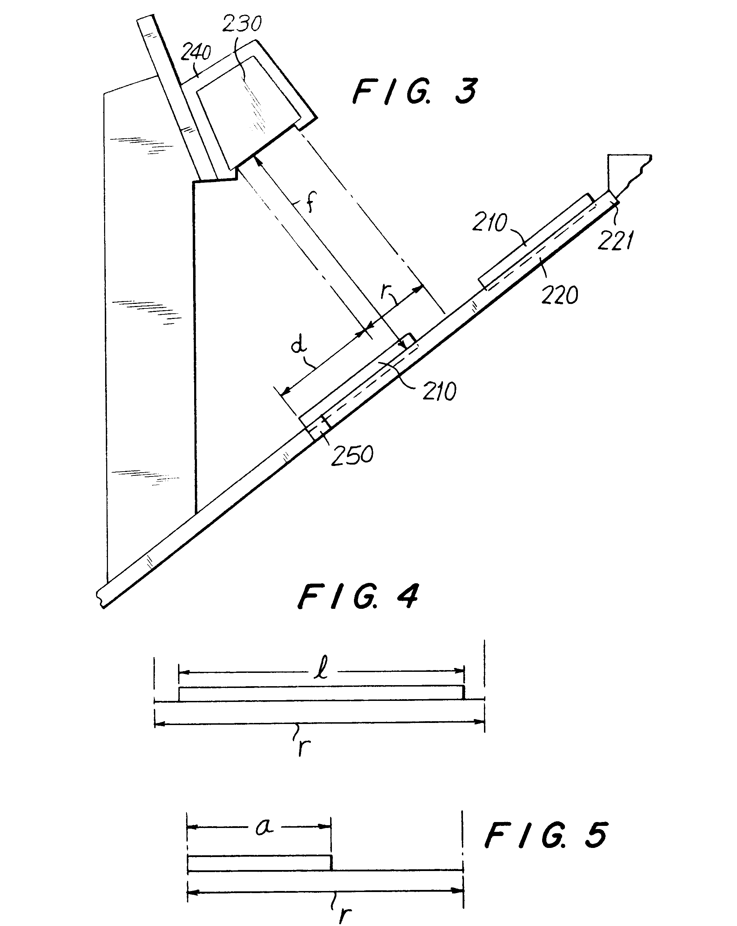

For measuring other length articles, camera 230 may be moved outwardly and refocused or a different lens used to have a correspondingly increased field of view, or the distance d may be changed as may be appropriate. Other linear array cameras having more pixels, e.g., a EG&G Reticon camera model LC0120 having 4096 pixels and a resolution of 0.01 mm in one axis, or fewer pixels with a corresponding lower resolution could be used to obtain directly or indirectly the length measurement (see Fig.4). Typically linear array cameras having such a higher pixel resolution are substantially more expensive.

In an alternate embodiment, stop 222 may be provided with a contact switch (not shown) that produces an enabling signal to camera 230 when article 210 comes to rest against stop 222. The enabling signal is used to enable camera 230 to obtain the length measurement. Once camera 230 has obtained the measured length, the data can be transmitted to a memory and microprocessor means for use in evaluating the test results.

A robot having an arm and opposing gripper fingers (not shown) may be used to grip article 210 subsequent to the lenght measurement for maneuvering article 210 off chute 220 to one or more workstations for subsequent measurements or tests of the characteristics of the smoking article.

Referring to FIGS. 3-5, an alternate embodiment of the present invention is shown. In this embodiment, camera 230 is configured for measuring lenght of article 210 during continuous movement of article 210 along chute 220 in response to article 210 passing detector 250. Preferably, as shown in FIG. 5, detector 250 enables camera 230 to obtain the length measure a when the leading edge of article 210 passes the end of detector 250 remote from camera 230 so that field of view r of camera 236 is located distance d from the far edge of sensor 250.

Referring to FIG. 4, sensor 250 may be used to enable camera 230 to obtain a direct measure 1 of article 230. In this embodiment, sensor 250 may be a device for detecting the presence of article 210 while article 210 is within field or view r.

Electronic linear array cameras provide almost an instantaneous measure of indirect length a or direct length 1 depending on the configuration. Accordingly, continous motion measures are possible. Measures taken while the article is stationary for a period of .085 second are, however, preferred for optimum resolution.

## Claims

1. Apparatus for measuring the length (1) of a smoking article (210) comprising:

   means (220) for advancing the article so that the article has a selected longitudinal orientation at a first location;

   means (230) for measuring an object in a first dimension having a selected field (r) of view along a first axis:

   means (240) for positioning the measuring means relative to the first location so that the first axis is parallel to the selected longitudinal orientation of the smoking article at the first location; and

   means for determining the length of the article in the field of view of the measuring means in the first axis in response to the article being in the first location.

2. Apparatus according to Claim 1 in which the first location further comprises a straight path (220) for advancing the smoking article, further comprising means (222) (250) for indicating that the smoking article is at the first location whereby the measuring means (230) measures the ,length of the smoking article in the field of view (r) in responce to the indicating means indicating that the article is in the first location.

3. Apparatus according to Claim 1 or 2, in which the first location further comprises a straight path along a chute (220) for advancing the smoking article (210) having a stop member (222) for arresting the advance of the smoking article at the first location, the measuring means (230) measuring the length (a) of the smoking article abutting the stop means in the field of view (r) in the first axis.

4. Apparatus according to Claim 3, in which the positioning means (240) positions the measuring means (230) so that one end of the field of view (r) is spaced a first distance (d) from the stop member (222), the measuring means measures the length (a) of the smoking article extending from the said one end into the field of view (r) in the first axis, and the determining means determines the length (1) in response to the first distance and the measured length.

5. Apparatus according to any preceding claim, in which the positioning means (240) positions the measuring means (230) so that one end of the field of view (r) is spaced a first distance (d) from the first location, the measuring means measures the length (a) of the smoking article extending from the said one end into the field of view in the first axis, and the determining means determines the length (1) in response to the first distance and the measured length.

6. Apparatus according to claim 4 or 5, in which the first distance (d) is from 25 to 100 mm and the field of view (r) is between 25 and 75 mm for measuring indirectly smoking articles having a length of between 50 and 175 mm.

7. Apparatus according to any of claims 1 to 3, in which the measuring means (230) has a field of view (r) sufficient to measure directly the length (1) of the smoking article (210) at the first location.

8. Apparatus according to any preceding claim, in which field of view (r) has an accuracy of from 0.025 to 0.175 mm and is between 25 and 175 mm from the first location.

9. Apparatus according to any preceding claim, in which the field of view (r) is between 125 and 175 mm.

10. Apparatus according to any preceding claim, in which the measuring means (230) comprises an electronic linear array camera having a focal distance (f) corresponding to the field of view (r) and the positioning means (240) positions the camera at a distance from the position of the article to be measured corresponding to the focal distance.

11. Apparatus according to claim 10, in which the camera (230) has a focal distance (f) between 225 mm and 250 mm, a field of view (r) between 25 and 75 mm, and an accuracy between 0.025 and 0.075 mm

12. Apparatus according to any preceding claim, in which the determining means comprises a microprocessor for calculating the length (a) measured by the camera directly or indirectly.

13. A method of measuring the length of a smoking article having a first end and a second end comprising:

providing a means for measuring the dimension of an object in a first dimension having a selected field of view along a first axis;

positioning the smoking article so that the first end is in a first location relative to the measuring means and the longitudinal axis of the article is parallel to the first axis; and

determining the length of the smoking article extending into the field of view along the first axis.

14. A method according to claim 13, in which positioning the article comprises indicating to the measuring means when the first end of the article is at the first location and determining the length comprises measuring the length the article extends into the field of view in the first axis in response to the indication of the first end being at the first location.

15. A method according to Claim 13 or 14, in which positioning the smoking article comprises selecting the first location to be a first distance from one edge of the field of view, and in which determining the length comprises measuring the length the second end extends from said one edge into the field of view along the first axis and summing the measured length and the first distance.

16. A method according to claim 13, in which positioning the article comprises positioning the first and second ends in the field of view and in which determining the length comprises measuring the length of the article directly.

17. A method according to any of claims 13 to 16, in which positioning the article comprises holding the article stationary during the measuring step.

18. A method according to any of claims 13 to 17, in which providing the measuring means comprises providing an electronic linear array camera having an accuracy of from 0.042 to 0.10 mm and a field of view between 42 and 100 mm.

# F I G. 1

# FIG. 2

FIG. 3

FIG. 4

FIG. 5

EP 0 500 301 A1

European Patent Office

**EUROPEAN SEARCH REPORT**

Application Number

EP 92 30 1288

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-3 030 140 (B.A.T. CIGARETTEN-FABRIKEN GMBH)<br><br>* the whole document *<br>--- | 1-5, 12-17 | G01B11/04 |
| Y | FR-A-2 393 265 (NUKEM GMBH)<br><br>* page 2, line 9 - line 38 *<br>--- | 1-5, 12-17 | |
| A | IEEE,1989 ANNUAL TEXTILE INDUSTRY TECHNICAL CONFERENCE<br>3 May 1989, MARIOTT CITY CENTER,CHARLOTTE,N.C.<br>pages 27 - 31;<br>BEN W. CROWLY: 'APPLICATION OF 1-D MACHINE VISION IN THE TEXTILE INDUSTRY'<br>* paragraph 1 *<br><br>----- | 10 | |
| | | | **TECHNICAL FIELDS SEARCHED (Int. Cl.5)**<br><br>G01B |

The present search report has been drawn up for all claims

| Place of search | Date of completion of the search | Examiner |
|---|---|---|
| THE HAGUE | 12 MAY 1992 | LUT K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

9